# EUROPEAN PATENT APPLICATION

(11) **EP 4 474 656 A1**
(43) Date of publication of application: **11.12.2024**
(21) Application number: 23216175.2
(22) Date of filing: 13.12.2023
(51) Int. Cl.: F04D 29/28, F04D 29/30, F04D 29/58, F04D 29/66, G06F 1/20

(54) **IMPELLER ARCHITECTURE FOR COOLING FAN NOISE REDUCTION**

(30) Priority: 06.06.2023 US 202318329763
(71) Applicant: INTEL Corporation, Santa Clara, CA 95054 (US)
(72) Inventor: SEN, Arnab, 560066 Bangalore (IN); KONAKALLA, Srinivasarao, 560067 Bangalore (IN); Alva, Samarth, 560103 Bangalore (IN); KUMAR, Amit, 829116 Bokaro (IN); GARG, Rachit, 560043 Bangalore (IN); ANBALAGAN, Bhavaneeswaran, 560087 Bengaluru (IN); KANIVIHALLI, Raghavendra S., 560037 BANGALORE (IN); PICHUMANI, Prasanna, 560076 Bangalore (IN)
(74) Representative: 2SPL Patentanwälte PartG mbB

(57) **Abstract**

Impeller architecture for a cooling fan and methodology for making same. The impeller architecture includes a plurality of blades, individual ones of the blades have a first end that is attached to a hub component in a sequential order, such that sequential first ends are attached to the circumference. An indexing function is applied to the sequential order, and blades or the spaces therebetween are modified accordingly to have a blade type based on their sequential location and the indexing function. The indexing function can be, in a non-limiting example, odd numbers or prime numbers.

## Description

### BACKGROUND

Many consumer products employ a cooling fan to mitigate the heat generated by components such as central processing units (CPUs) or graphics processing units (GPUs). In operation, as components get hotter (i.e., thermals increase), an impeller in the cooling fan speeds up to increase airflow and remove the heat. However, impellers generate noise and the faster the impeller spins, the louder the noise it produces. Accordingly, reducing the noise of a cooling fan without compromising its cooling performance is desirable.

### BRIEF DESCRIPTION OF THE DRAWINGS

FIG. 1 and FIG. 2 are illustrations of an exemplary consumer product in which embodiments of the present disclosure may be implemented.
FIG. 3 illustrates a cooling fan and impeller architecture, in accordance with various embodiments.
FIG. 4 illustrates some impeller diameter variations of provided embodiments.
FIG. 5 is a simple blade illustration, in accordance with various embodiments.
FIG. 6 illustrates some space variations between blades of an impeller, in accordance with various embodiments.
FIG. 7 illustrates noise reduction and fan efficiency results for various embodiments.
FIG. 8 is a block diagram of an example compute node that may include any of the embodiments disclosed herein.
FIG. 9 illustrates a multi-processor environment in which embodiments may be implemented.
FIG. 10 is a block diagram of an example processor unit to execute computer-executable instructions as part of implementing technologies described herein.

### DETAILED DESCRIPTION

Many consumer products have one or more components that generate an undesirable amount of heat during operation. For example, laptop computers ("laptops") may have one or more heat-generating central processing units (CPUs) or graphics processing units (GPUs). To mitigate the generated heat, a cooling fan is usually employed.

The cooling fan includes an impeller inside a housing. The impeller generally has a circular shape, comprising a plurality of blades attached to a hub that is powered by a motor. When the impeller spins, airflow gets generated and comes out from one or two fan outlets. In operation, as components get hotter (i.e., thermals increase), the impeller may speed up to increase airflow and remove the heat. However, impellers generate noise, and as the impeller speeds up, it generates more noise, which adversely affects the product's acoustics and hence, the user experience. In other words, the faster the impeller spins, the louder the noise it produces. In this manner, acoustics and thermals are closely related, and reducing the noise of a cooling fan without compromising its cooling performance presents a technical problem.

Some solutions use larger impeller blades to move more air at a lower impeller speed, and some other solutions implement variable speed cooling fans. However, many consumer products are too limited in available space to accommodate larger impeller blades and/or may generate too much heat during operation to successfully employ a variable speed cooling fan.

Aspects of the present disclosure provide a technical solution to this technical problem and other related enhancements, in the form of impeller architecture for cooling fan noise reduction. Various embodiments include variable blade lengths, effecting a variable diameter. Other embodiments include variations in blade edges and/or variations in blade surface integrity. The herein provided architectures and methods for creating same reduce acoustics while delivering the required performance for consumer products such as laptops.

Embodiments can be detected with a visual inspection of the impeller itself, to look for the diameter and blade variations that are observable, the blade variations occur as a function superimposed on the sequential order of the blades, as disclosed hereinbelow. A more detailed description of the aspects of the present disclosure follows a terminology section.

### Terminology

As used herein, a "computing system" refers to any of a variety of computing devices and includes systems comprising multiple discrete physical components. In some embodiments, the computing systems are implemented in a laptop notebook, such as an enterprise notebook application, a consumer notebook application, gaming notebook application. Similarly, a computing system can be in a desktop environment, such as a workstation, a mini desktop computer. In addition, the computing system can also be in wearable devices such as VR gaming computes. Finally, the computing systems can also be located in a data center environment, such as an enterprise data center (e.g., a data center owned and operated by a company and typically located on company premises), managed services data center (e.g., a data center managed by a third party on behalf of a company), a colocated data center (e.g., a data center in which data center infrastructure is provided by the data center host and a company provides and manages their own data center components (servers, etc.)), cloud data center (e.g., a data center operated by a cloud services provider that host companies applications and data), and an edge data center (e.g., a data center, typically having a smaller footprint than other data center types, located close to the geographic area that it serves).

As used herein, the terms "processor unit", "processing unit" or "processor" may refer to any device or portion of a device that processes electronic data from registers and/or memory to transform that electronic data into other electronic data that may be stored in registers and/or memory. A processor unit may be a system-on-a-chip (SOC), and/or include one or more digital signal processors (DSPs), application-specific integrated circuits (ASICs), central processing units (CPUs), graphics processing units (GPUs), general-purpose GPUs (GPGPUs), accelerated processing units (APUs), field-programmable gate arrays (FPGAs), neural network processing units (NPUs), data processor units (DPUs), accelerators (e.g., graphics accelerator, compression accelerator, artificial intelligence accelerator), controller cryptoprocessors (specialized processors that execute cryptographic algorithms within hardware), server processors, controllers, or any other suitable type of processor units. As such, the processor unit can be referred to as an XPU (or xPU).

Terms or values modified by the word "substantially" include arrangements, orientations, spacings, or positions that vary by plus or minus 20% (inclusive) from the meaning of the unmodified term or value. Terms or values modified by the word "about" include values inclusive of 10% less than the term or value to inclusive of 10% greater than the term or value.

### Description of aspects of the present disclosure

Example embodiments are hereinafter described in conjunction with the following drawing figures, wherein like numerals denote like elements. Figures are not necessarily to scale. As may be appreciated, certain terminology, such as "upper,", "uppermost", "lower," "above," "below," "bottom," and "top" refer to directions based on viewing the Figures to which reference is made. Further, terms such as "front," "back," "rear,", "side", "vertical", and "horizontal" may describe an orientation and/or location within a consistent but arbitrary frame of reference which is made clear by reference to the text and the associated Figures describing the component under discussion. Such terminology may include the words specifically mentioned above, derivatives thereof, and words of similar import. For the sake of brevity, well-known structures and devices may be shown in block diagram form to facilitate a description thereof.

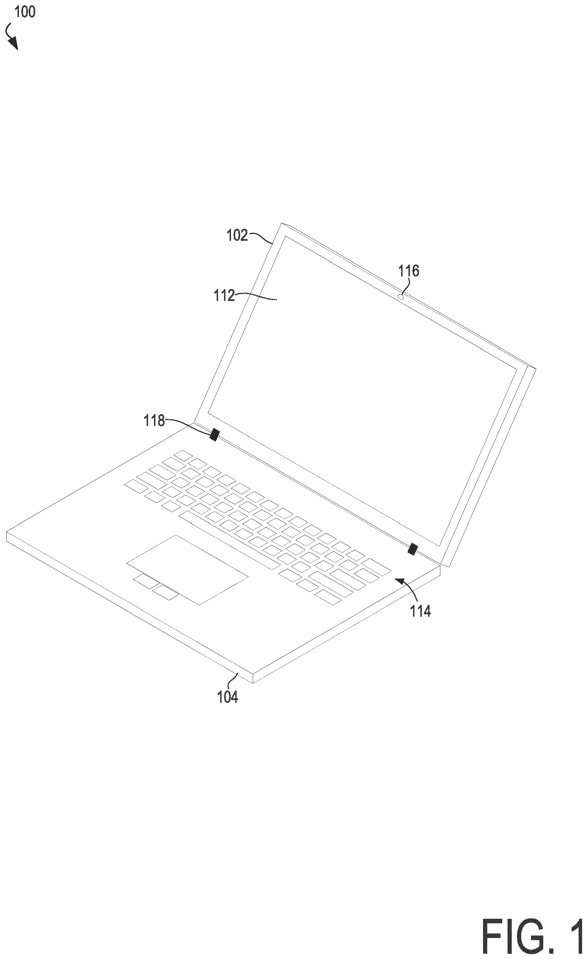

A variety of consumer products include one or more heat generating components (e.g., a CPU and/or GPU) and include a cooling fan in which embodiments of the impeller architecture for cooling fan noise reduction may be implemented. In FIG. 1 an exemplary consumer product is embodied as a compute device 100.

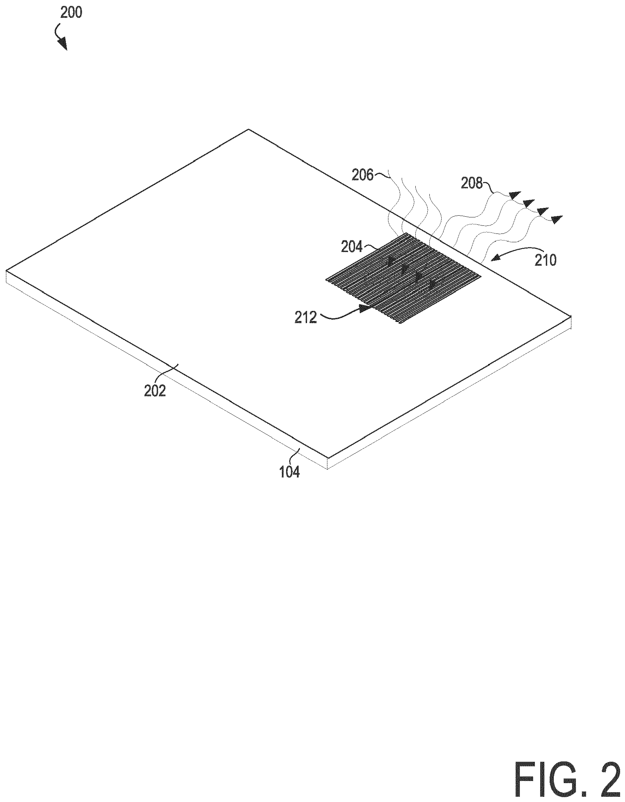

The compute device 100 includes a housing comprising a lid portion 102 and a base portion 104. The lid portion 102 includes a display 112, and the base portion 104 includes a keyboard 114. The illustrative compute device 100 is embodied as a laptop with a clamshell configuration with one or more hinges 118 joining the base portion 104 and the lid portion 102. Accordingly, compute device 100 can be in an open configuration (shown in FIG. 1) or a closed configuration, in which the lid portion 102 is positioned on top of the base portion 104 with the display 112 facing downwards above the keyboard on the base portion 104 (e.g., see FIG. 2). Other variations of the compute device 100 may include a display that can rotate up to 360°, allowing the compute device 100 to be in a book configuration, a tablet configuration, or the like. The compute device 100 may be a 2-in-1 device, with a lid portion 102 that can separate from the base portion 104. Moreover, the compute device 100 may embody a single housing without hinges 118.

The display 112 may be any suitable size and/or resolution, such as a 5-18-inch display, with a resolution from 340 x 480 to 3820 x 2400. The display 112 may use any suitable display technology, such as LED, OLED, QD-LED, electronic paper display, and may be a touchscreen display. The lid portion 102 may also include a camera 116. The camera 116 may include one or more fixed or adjustable lenses and one or more image sensors. The image sensors may be any suitable type of image sensors, such as a CMOS or CCD image sensor. The camera 116 may have any suitable aperture, focal length, field of view, etc. For example, the camera 116 may have a field of view of 60-110° in the azimuthal and/or elevation directions. As may be appreciated, the compute device 100 may also be another portable or nonportable electronic device, such as a tablet, a desktop computer, a server computer, or the like.

A view 200 of the bottom of the compute device 100 is shown in FIG. 2. A portion of the housing referred to as a cover 202 (sometimes, D cover) is on the bottom of the base portion 104. Air intake holes 204 are defined in the cover to allow intake air 206 to pass through the base portion 104 into the cooling fan assembly 212 (shortened herein to cooling fan and/or simply "fan" 212). In the compute device 100, and in each of the contemplated consumer products, the cooling fan 212 is often located near heat generating component(s) (not shown) to dissipate heat or exhaust air 208 from a primary air exhaust vent 210 of the housing.

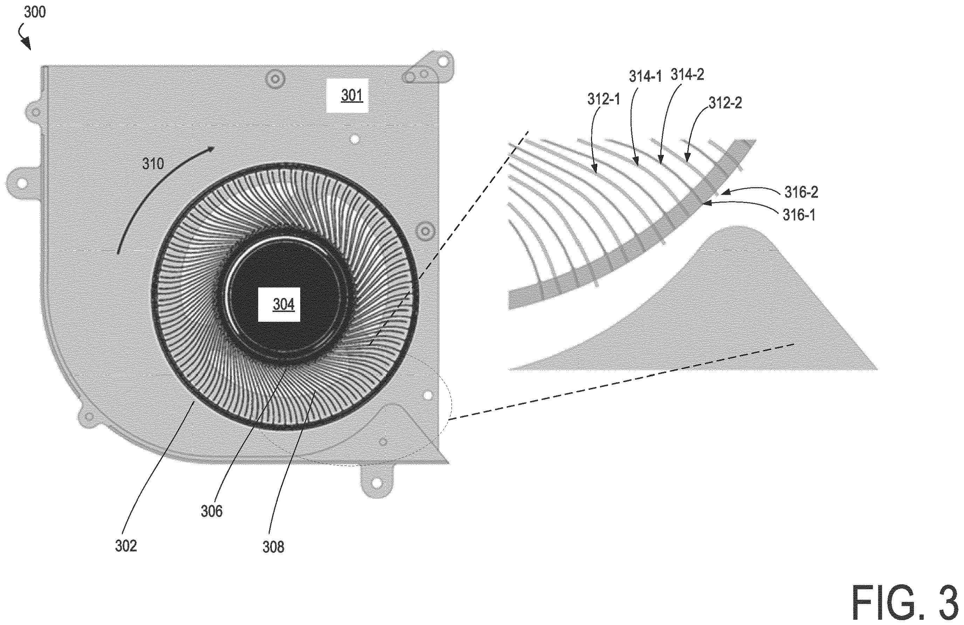

With the above provided context for use, the cooling fan 300 is now described. FIG. 3 illustrates a cooling fan 300 within a fan housing 301 with impeller 302 architecture, in accordance with various embodiments. In operation, a hub component 304 that is circular with a circumference 306 generally spins in direction 310 responsive to a motor, not shown. The spinning hub component 304 causes the impeller 302 to spin and direct airflow. The impeller 302 includes a plurality of blades 308; individual ones of the blades 308 have a first end and are attached to the hub component 304 in a sequential order, such that sequential first ends are attached to the circumference 306 and respective second ends extend radially outward to an impeller diameter, as shown. As used herein, sequential order means consecutive or that the blades are arranged in a succeeding order. For example, if there are N blades, they are arranged around the circumference of the hub component 304 as blade 1, blade 2, blade 3, blade 4,. . . blade N.

Embodiments introduce a methodology to vary the blades 308 in the impeller architecture. With the provided methodology, individual ones of the blades 308 have a "blade type" that varies from one to the next. The blade type includes at least two distinctly different manifestations. A variety of different blade types may be implemented. The manner (i.e., method, or way) that the blade type varies from one blade to a succeeding blade has an observable pattern; specifically, the blade type varies as a function of an indexing function applied to the sequential order. The indexing function may be "odd numbers," "even numbers," "prime numbers," or other sequencing functions.

Returning to the above example, in which the sequential order is blade 1, blade 2, blade 3, blade 4, ... blade N. In a non-limiting example, the indexing function is odd numbers, (i.e., every odd numbered blade has a blade type that is different from the remaining blades) and the blade type variation is observed as follows: blade 1 has a first type, blade 2 has a second type, blade 3 has the first type, blade 4 has the second type, etc., to blade N.

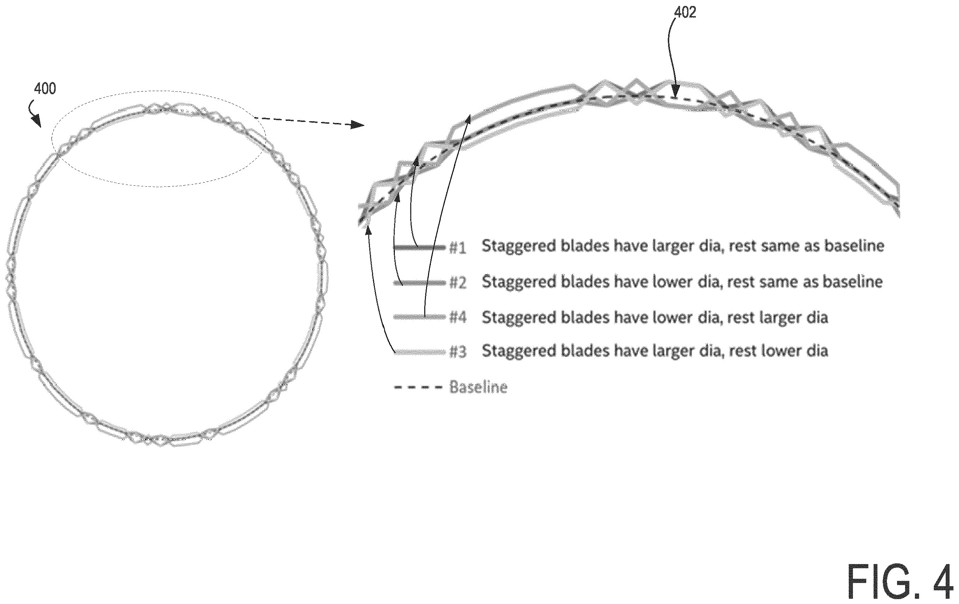

As illustrated in the expanded view to the right in FIG. 3, in some embodiments, the blade type is a blade length that includes a first length (blade 312-1 and blade 312-2) and a second length (blade 314-1 and blade 314-2). As is described in more detail in connection with FIG. 4, when blade type is blade length, the blade length difference appears as "staggered blades" and embodiments manifest as an impeller 302 with a variable perimeter 400, comprising blades creating a first diameter 316-1 associated with the first blade length and blades creating a second diameter 316-2 associated with the second blade length.

Arbitrarily, the first blade type may be assigned a baseline blade type and the second blade type may be assigned a modified blade type, such that modified blades appear as a function of the indexing function (e.g., every odd blade is longer/shorter/notched, etc.). In FIG. 4, a baseline impeller diameter 402 is shown, representing blade types that are blade lengths, in which there is a baseline (or default) blade length. The application of the indexing function to the sequential order results, in this example, in a "staggered blade" appearance in a top down view, as illustrated. Scenario 1 illustrates an impeller perimeter when staggered blades have a length that is larger (longer) than the baseline blade length. Scenario 2 illustrates an impeller perimeter when staggered blades have a length that is smaller (shorter) than the baseline blade length. Scenario 3 illustrates an impeller perimeter when staggered blades have a length that is smaller (shorter) than the baseline blade length and remaining blades have a length that is larger (longer) than the baseline blade length. And Scenario 4 illustrates an impeller perimeter when staggered blades have a length that is larger (longer) than the baseline blade length, and remaining blades have a length that is smaller (shorter) than the baseline blade length.

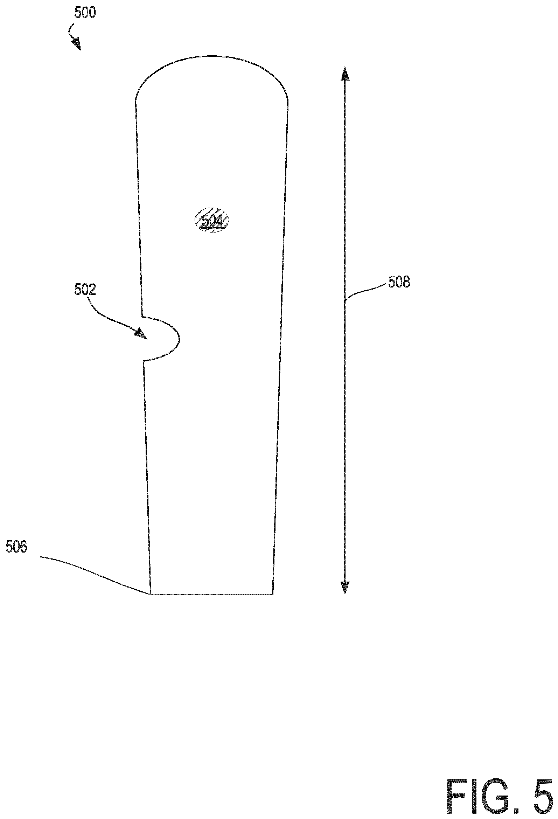

FIG. 5 is a simple blade illustration for a more detailed blade type discussion. Blade 500 is shown with blade length 508. The first end 506 attaches to the circumference of the hub component. In some embodiments, the blade type includes a notch 502 on an edge of a blade (e.g., the blade type is "notched edge" or "smooth edge"). The notched edge blade types can be further subdivided by one or more combinations of varying the size of the notch ("notch-size" blade type), the shape of the notch ("notch-shape"), and/or the location of the notch ("notch-location" blade type) on the blade edge (e.g., closer to the impeller perimeter, or closer to the hub circumference, or topside or bottom side or combination of more than one). Non-limiting examples of notchshapes include regular shapes, such as circles, ovals, rectangles, and irregular shapes. The notch-location blade types can further be subdivided into notches that are distributed radially along a blade, and notches that are distributed axially across a blade. Also, the notched edge blade type can include a variation in a number of notches on the blade edge.

In practice, as the cooling fan blade rotates, it creates a pressure surface and a suction surface. The pressure difference between the pressure and suction surface results in flow curling at trailing edge and vortex generation. The notched embodiments reduce the pressure fluctuation along periphery through the pressure balance feature/notch. This reduces local turbulence at a blade radial location or a tip region, resulting in reduced broadband noise. In addition, the nonuniform distribution of blade type variations shifts the noise spectrum output of the cooling fan to lower frequencies resulting in lower perceived noise.

Other embodiments include blade type "perforated," a perforated blade type includes a through-hole 504 in the blade, and remaining blades are "solid." The perforated blade types can be further subdivided, like what is described above for the notched edge blade types (size, shape, location, number of perforations, etc.). Further still, some embodiments combine both notched and perforated blade types, and some embodiments combine notched, perforated, and blade length blade types.

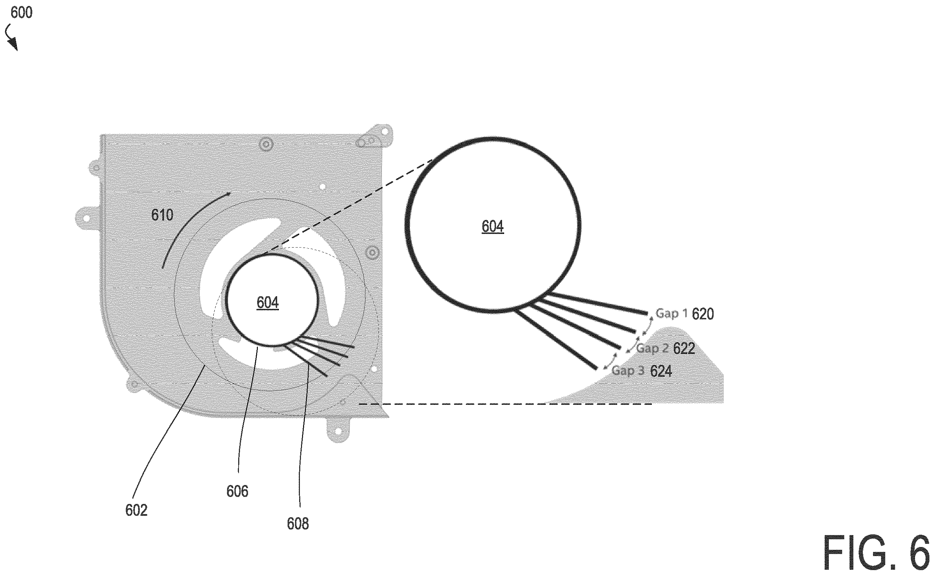

Other embodiments vary the spacing between blades of an impeller, also as a function of the indexing function applied to the sequential order, as shown in FIG. 6. In cooling fan 600, hub component 604 has circumference 606 and rotates in direction 610. Individual blades 608 of impeller 602 are attached thereto as described herein. In the expanded view to the right, four blades are illustrated, separated by spaces or gaps. In various aspects of the disclosure, the spaces between sequential first ends deliberately vary by more than about 20%. For example, gap 1 (620) may range between+/- 20% from gap 2 (622), which may further be about +/- 20% different than gap 3 (624). Variations in the spaces between sequential first ends can be combined with the other blade type variations described above. Varying blade spacing has the following effect. Vortices shed from the blades in the impeller interact with the cutwater and create tonal noise. Whereas, with equal spacing, all vortices from a particular blade interact with cutwater. This results in tonal noise at blade pass frequency and its harmonics due to the uniform pattern of interaction. In the uneven blade gap design, it would create a disruption in the frequency at which these interactions occur, resulting in lower tonal noise.

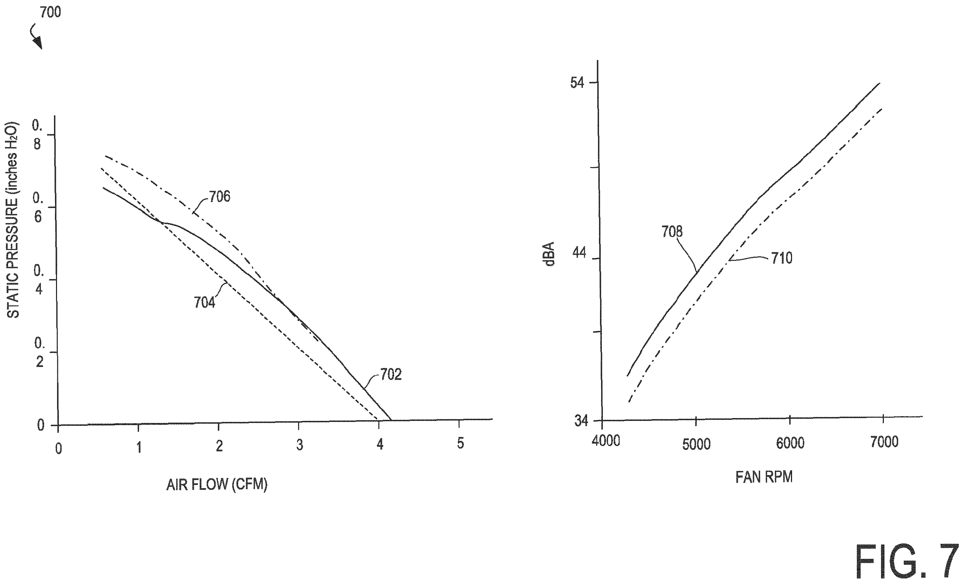

Having described various blade types and methods for applying them to create embodiments of the impeller apparatus, FIG. 7 returns to the relationship between noise and airflow for cooling fans. A pressure versus air flow graph for the exemplary cooling fan at five volts is depicted on the left of the noise graph, showing a baseline 702 performance that drops as the air flow increases. Variations 704 and 706 notably provide increased static pressure at lower airflow. In a baseline design without blade type variations, all vortices from a particular blade interact with cutwater. This results in tonal noise at blade pass frequency and its harmonics due to the uniform pattern of interaction. Using the uneven blade length architectures proposed herein, a disruption in the frequency at which these interactions occur is created, resulting in lower tonal noise.

An exemplary cooling fan was modified to include notched blade types, described above, to quantify the impact of the pressure balance feature/notch. It was observed at same RPM the fan provided 1~1.5 dBA noise reduction, as illustrated with baseline 708 to dashed line 710.

Thus, architectures and methods for a cooling fan impeller with noise reduction have been provided. The following description illustrates various context for usage and application of provided aspects of the present disclosure.

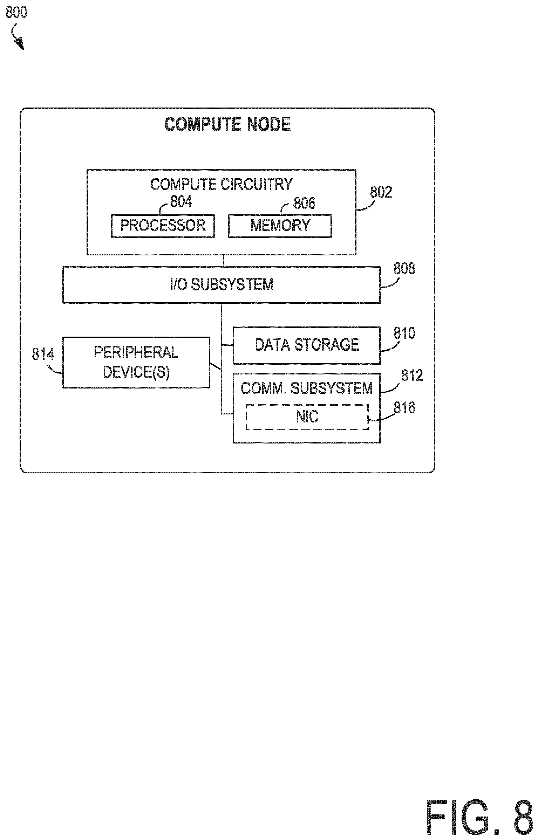

In the simplified example depicted in FIG. 8, a compute node 800 includes a compute engine (referred to herein as "compute circuitry") 802, an input/output (I/O) subsystem 808, data storage 810, a communication circuitry subsystem 812, and, optionally, one or more peripheral devices 814. With respect to the present example, the compute node 800 or compute circuitry 802 may perform the operations and tasks attributed to the system 101. In other examples, respective compute nodes 800 may include other or additional components, such as those typically found in a computer (e.g., a display, peripheral devices, etc.). Additionally, in some examples, one or more of the illustrative components may be incorporated in, or otherwise form a portion of, another component.

In some examples, the compute node 800 may be embodied as a single device such as an integrated circuit, an embedded system, a field-programmable gate array (FPGA), a system-on-a-chip (SOC), or other integrated system or device. In the illustrative example, the compute node 800 includes or is embodied as a processor 804 and a memory 806. The processor 804 may be embodied as any type of processor capable of performing the functions described herein (e.g., executing compile functions and executing an application). For example, the processor 804 may be embodied as a multi-core processor(s), a microcontroller, a processing unit, a specialized or special purpose processing unit, or other processor or processing/controlling circuit.

In some examples, the processor 804 may be embodied as, include, or be coupled to an FPGA, an application specific integrated circuit (ASIC), reconfigurable hardware or hardware circuitry, or other specialized hardware to facilitate performance of the functions described herein. Also in some examples, the processor 804 may be embodied as a specialized x-processing unit (xPU) also known as a data processing unit (DPU), infrastructure processing unit (IPU), or network processing unit (NPU). Such an xPU may be embodied as a standalone circuit or circuit package, integrated within an SOC, or integrated with networking circuitry (e.g., in a SmartNIC, or enhanced SmartNIC), acceleration circuitry, storage devices, or AI hardware (e.g., GPUs or programmed FPGAs). Such an xPU may be designed to receive programming to process one or more data streams and perform specific tasks and actions for the data streams (such as hosting microservices, performing service management or orchestration, organizing, or managing server or data center hardware, managing service meshes, or collecting and distributing telemetry), outside of the CPU or general-purpose processing hardware. However, it will be understood that a xPU, a SOC, a CPU, and other variations of the processor 804 may work in coordination with each other to execute many types of operations and instructions within and on behalf of the compute node 800.

The memory 806 may be embodied as any type of volatile (e.g., dynamic random-access memory (DRAM), etc.) or non-volatile memory or data storage capable of performing the functions described herein. Volatile memory may be a storage medium that requires power to maintain the state of data stored by the medium. Non-limiting examples of volatile memory may include several types of random-access memory (RAM), such as DRAM or static random-access memory (SRAM). One type of DRAM that may be used in a memory module is synchronous dynamic random-access memory (SDRAM).

In an example, the memory device is a block addressable memory device, such as those based on NAND or NOR technologies. A memory device may also include a three-dimensional crosspoint memory device (e.g., Intel^{®} 3D XPoint^{™} memory), or other byte addressable write-in-place nonvolatile memory devices. The memory device may refer to the die itself and/or to a packaged memory product. In some examples, 3D crosspoint memory (e.g., Intel^{®} 3D XPoint^{™} memory) may comprise a transistor-less stackable cross point architecture in which memory cells sit at the intersection of word lines and bit lines and are individually addressable and in which bit storage is based on a change in bulk resistance. In some examples, all or a portion of the memory 806 may be integrated into the processor 804. The memory 806 may store various software and data used during operation such as one or more applications, data operated on by the application(s), libraries, and drivers.

The compute circuitry 802 is communicatively coupled to other components of the compute node 800 via the I/O subsystem 808, which may be embodied as circuitry and/or components to facilitate input/output operations with the compute circuitry 802 (e.g., with the processor 804 and/or the main memory 806) and other components of the compute circuitry 802. For example, the I/O subsystem 808 may be embodied as, or otherwise include, memory controller hubs, input/output control hubs, integrated sensor hubs, firmware devices, communication links (e.g., point-to-point links, bus links, wires, cables, light guides, printed circuit board traces, etc.), and/or other components and subsystems to facilitate the input/output operations. In some examples, the I/O subsystem 808 may form a portion of a system-on-a-chip (SoC) and be incorporated, along with one or more of the processor 804, the memory 806, and other components of the compute circuitry 802, into the compute circuitry 802.

The one or more illustrative data storage devices 810 may be embodied as any type of devices configured for short-term or long-term storage of data such as, for example, memory devices and circuits, memory cards, hard disk drives, solid-state drives, or other data storage devices. Individual data storage devices 810 may include a system partition that stores data and firmware code for the data storage device 810. Individual data storage devices 810 may also include one or more operating system partitions that store data files and executables for operating systems depending on, for example, the type of compute node 800.

The communication subsystem 812 may be embodied as any communication circuit, device, transceiver circuit, or collection thereof, capable of enabling communications over a network between the compute circuitry 802 and another compute device (e.g., an edge gateway of an implementing edge computing system).

The communication subsystem 812 may implement any of a number of wireless standards or protocols, including but not limited to Institute for Electrical and Electronic Engineers (IEEE) standards including Wi-Fi (IEEE 802.11 family), IEEE 802.16 standards (e.g., IEEE 802.16-2005 Amendment), Long-Term Evolution (LTE) project along with any amendments, updates, and/or revisions (e.g., advanced LTE project, ultra-mobile broadband (UMB) project (also referred to as "3GPP2"), etc.). IEEE 802.16 compatible Broadband Wireless Access (BWA) networks are generally referred to as WiMAX networks, an acronym that stands for Worldwide Interoperability for Microwave Access, which is a certification mark for products that pass conformity and interoperability tests for the IEEE 802.16 standards. The communication subsystem 812 may operate in accordance with a Global System for Mobile Communication (GSM), General Packet Radio Service (GPRS), Universal Mobile Telecommunications System (UMTS), High Speed Packet Access (HSPA), Evolved HSPA (E-HSPA), or LTE network. The communication subsystem 812 may operate in accordance with Enhanced Data for GSM Evolution (EDGE), GSM EDGE Radio Access Network (GERAN), Universal Terrestrial Radio Access Network (UTRAN), or Evolved UTRAN (E-UTRAN). The communication subsystem 812 may operate in accordance with Code Division Multiple Access (CDMA), Time Division Multiple Access (TDMA), Digital Enhanced Cordless Telecommunications (DECT), Evolution-Data Optimized (EV-DO), and derivatives thereof, as well as any other wireless protocols that are designated as 3G, 4G, 5G, and beyond. The communication subsystem 812 may operate in accordance with other wireless protocols in other embodiments. The communication subsystem 812 may include an antenna to facilitate wireless communications and/or to receive other wireless communications (such as AM or FM radio transmissions).

In some embodiments, the communication subsystem 812 may manage wired communications, such as electrical, optical, or any other suitable communication protocols (e.g., IEEE 802.3 Ethernet standards). As noted above, the communication subsystem 812 may include multiple communication components. For instance, a first communication subsystem 812 may be dedicated to shorter-range wireless communications such as Wi-Fi or Bluetooth, and a second communication subsystem 812 may be dedicated to longer-range wireless communications such as global positioning system (GPS), EDGE, GPRS, CDMA, WiMAX, LTE, EV-DO, or others. In some embodiments, a first communication subsystem 812 may be dedicated to wireless communications, and a second communication subsystem 812 may be dedicated to wired communications.

The illustrative communication subsystem 812 includes an optional network interface controller (NIC) 820, which may also be referred to as a host fabric interface (HFI). The NIC 820 may be embodied as one or more add-in-boards, daughter cards, network interface cards, controller chips, chipsets, or other devices that may be used by the compute node 800 to connect with another compute device (e.g., an edge gateway node). In some examples, the NIC 820 may be embodied as part of a system-on-a-chip (SoC) that includes one or more processors or included on a multichip package that also contains one or more processors. In some examples, the NIC 820 may include a local processor (not shown) and/or a local memory (not shown) that are both local to the NIC 820. In such examples, the local processor of the NIC 820 may be capable of performing one or more of the functions of the compute circuitry 802 described herein. Additionally, or alternatively, in such examples, the local memory of the NIC 820 may be integrated into one or more components of the client compute node at the board level, socket level, chip level, and/or other levels.

Additionally, in some examples, a respective compute node 800 may include one or more peripheral devices 814. Such peripheral devices 814 may include any type of peripheral device found in a compute device or server such as audio input devices, a display, other input/output devices, interface devices, and/or other peripheral devices, depending on the particular type of the compute node 800. In further examples, the compute node 800 may be embodied by a respective edge compute node (whether a client, gateway, or aggregation node) in an edge computing system or like forms of appliances, computers, subsystems, circuitry, or other components.

In other examples, the compute node 800 may be embodied as any type of device or collection of devices capable of performing various compute functions. Respective compute nodes 800 may be embodied as a type of device, appliance, computer, or other "thing" capable of communicating with other compute nodes that may be edge, networking, or endpoint components. For example, a compute device may be embodied as a personal computer, server, smartphone, a mobile compute device, a smart appliance, smart camera, an in-vehicle compute system (e.g., a navigation system), a weatherproof or weather-sealed computing appliance, a self-contained device within an outer case, shell, etc., or other device or system capable of performing the described functions.

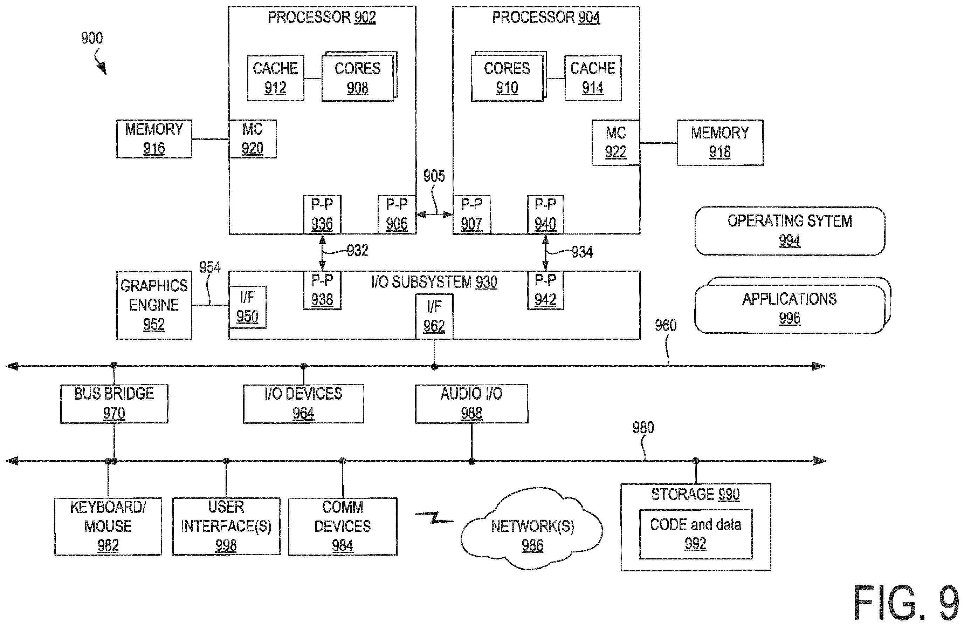

FIG. 9 illustrates a multi-processor environment in which embodiments may be implemented. Processor units 902 and 904 further comprise cache memories 912 and 914, respectively. The cache memories 912 and 914 can store data (e.g., instructions) utilized by one or more components of the processor units 902 and 904, such as the processor cores 908 and 910. The cache memories 912 and 914 can be part of a memory hierarchy for the computing system 900. For example, the cache memories 912 can locally store data that is also stored in a memory 916 to allow for faster access to the data by the processor unit 902. In some embodiments, the cache memories 912 and 914 can comprise multiple cache levels, such as level 1 (L1), level 2 (L2), level 3 (L3), level 4 (L4) and/or other caches or cache levels. In some embodiments, one or more levels of cache memory (e.g., L2, L3, L4) can be shared among multiple cores in a processor unit or among multiple processor units in an integrated circuit component. In some embodiments, the last level of cache memory on an integrated circuit component can be referred to as a last level cache (LLC). One or more of the higher levels of cache levels (the smaller and faster caches) in the memory hierarchy can be located on the same integrated circuit die as a processor core and one or more of the lower cache levels (the larger and slower caches) can be located on an integrated circuit dies that are physically separate from the processor core integrated circuit dies.

Although the computing system 900 is shown with two processor units, the computing system 900 can comprise any number of processor units. Further, a processor unit can comprise any number of processor cores. A processor unit can take various forms such as a central processing unit (CPU), a graphics processing unit (GPU), general-purpose GPU (GPGPU), accelerated processing unit (APU), field-programmable gate array (FPGA), neural network processing unit (NPU), data processor unit (DPU), accelerator (e.g., graphics accelerator, digital signal processor (DSP), compression accelerator, artificial intelligence (AI) accelerator), controller, or other types of processing units. As such, the processor unit can be referred to as an XPU (or xPU). Further, a processor unit can comprise one or more of these several types of processing units. In some embodiments, the computing system comprises one processor unit with multiple cores, and in other embodiments, the computing system comprises a single processor unit with a single core. As used herein, the terms "processor unit" and "processing unit" can refer to any processor, processor core, component, module, engine, circuitry, or any other processing element described or referenced herein.

In some embodiments, the computing system 900 can comprise one or more processor units that are heterogeneous or asymmetric to another processor unit in the computing system. There can be a variety of differences between the processing units in a system in terms of a spectrum of metrics of merit including architectural, microarchitectural, thermal, power consumption characteristics, and the like. These differences can effectively manifest themselves as asymmetry and heterogeneity among the processor units in a system.

The processor units 902 and 904 can be located in a single integrated circuit component (such as a multi-chip package (MCP) or multi-chip module (MCM)) or they can be located in separate integrated circuit components. An integrated circuit component comprising one or more processor units can comprise additional components, such as embedded DRAM, stacked high bandwidth memory (HBM), shared cache memories (e.g., L3, L4, LLC), input/output (I/O) controllers, or memory controllers. Any of the additional components can be located on the same integrated circuit die as a processor unit, or on one or more integrated circuit dies separate from the integrated circuit dies comprising the processor units. In some embodiments, these separate integrated circuit dies can be referred to as "chiplets". In some embodiments where there is heterogeneity or asymmetry among processor units in a computing system, the heterogeneity or asymmetric can be among processor units located in the same integrated circuit component. In embodiments where an integrated circuit component comprises multiple integrated circuit dies, interconnections between dies can be provided by the package substrate, one or more silicon interposers, one or more silicon bridges embedded in the package substrate (such as Intel^{®} embedded multi-die interconnect bridges (EMIBs)), or combinations thereof.

Processor units 902 and 904 further comprise memory controller logic (MC) 920 and 922. As shown in FIG. 9, MCs 920 and 922 control memories 916 and 918 coupled to the processor units 902 and 904, respectively. The memories 916 and 918 can comprise various types of volatile memory (e.g., dynamic random-access memory (DRAM), static random-access memory (SRAM)) and/or non-volatile memory (e.g., flash memory, chalcogenide-based phase-change non-volatile memories), and comprise one or more layers of the memory hierarchy of the computing system. While MCs 920 and 922 are illustrated as being integrated into the processor units 902 and 904, in alternative embodiments, the MCs can be external to a processor unit.

Processor units 902 and 904 are coupled to an Input/Output (I/O) subsystem 930 via point-to-point interconnections 932 and 934. The point-to-point interconnection 932 connects a point-to-point interface 936 of the processor unit 902 with a point-to-point interface 938 of the I/O subsystem 930, and the point-to-point interconnection 934 connects a point-to-point interface 940 of the processor unit 904 with a point-to-point interface 942 of the I/O subsystem 930. Input/Output subsystem 930 further includes an interface 950 to couple the I/O subsystem 930 to a graphics engine 952. The I/O subsystem 930 and the graphics engine 952 are coupled via a bus 954.

The Input/Output subsystem 930 is further coupled to a first bus 960 via an interface 962. The first bus 960 can be a Peripheral Component Interconnect Express (PCIe) bus or any other type of bus. Various I/O devices 964 can be coupled to the first bus 960. A bus bridge 970 can couple the first bus 960 to a second bus 980. In some embodiments, the second bus 980 can be a low pin count (LPC) bus. Various devices can be coupled to the second bus 980 including, for example, a keyboard/mouse 982, audio I/O devices 988, and a storage device 990, such as a hard disk drive, solid-state drive, or another storage device for storing computer-executable instructions (code) 992 or data. The code 992 can comprise computer-executable instructions for performing methods described herein. Additional components that can be coupled to the second bus 980 include communication device(s) 984, which can provide for communication between the computing system 900 and one or more wired or wireless networks 986 (e.g. Wi-Fi, cellular, or satellite networks) via one or more wired or wireless communication links (e.g., wire, cable, Ethernet connection, radio-frequency (RF) channel, infrared channel, Wi-Fi channel) using one or more communication standards (e.g., IEEE 802.11 standard and its supplements).

In embodiments where the communication devices 984 support wireless communication, the communication devices 984 can comprise wireless communication components coupled to one or more antennas to support communication between the computing system 900 and external devices. The wireless communication components can support various wireless communication protocols and technologies such as Near Field Communication (NFC), IEEE 802.11 (Wi-Fi) variants, WiMax, Bluetooth, Zigbee, 4G Long Term Evolution (LTE), Code Division Multiplexing Access (CDMA), Universal Mobile Telecommunication System (UMTS) and Global System for Mobile Telecommunication (GSM), and 5G broadband cellular technologies. In addition, the wireless modems can support communication with one or more cellular networks for data and voice communications within a single cellular network, between cellular networks, or between the computing system and a public switched telephone network (PSTN).

The system 900 can comprise removable memory such as flash memory cards (e.g., SD (Secure Digital) cards), memory sticks, Subscriber Identity Module (SIM) cards). The memory in system 900 (including caches 912 and 914, memories 916 and 918, and storage device 990) can store data and/or computer-executable instructions for executing an operating system 994 and application programs 996. Example data includes web pages, text messages, images, sound files, and video data biometric thresholds for particular users or other data sets to be sent to and/or received from one or more network servers or other devices by the system 900 via the one or more wired or wireless networks 986, or for use by the system 900. The system 900 can also have access to external memory or storage (not shown) such as external hard drives or cloud-based storage.

The operating system 994 (also simplified to "OS" herein) can control the allocation and usage of the components illustrated in FIG. 6 and support the one or more application programs 996. The application programs 996 can include common computing system applications (e.g., email applications, calendars, contact managers, web browsers, messaging applications) as well as other computing applications.

In some embodiments, a hypervisor (or virtual machine manager) operates on the operating system 994 and the application programs 996 operate within one or more virtual machines operating on the hypervisor. In these embodiments, the hypervisor is a type-2 or hosted hypervisor as it is running on the operating system 994. In other hypervisor-based embodiments, the hypervisor is a type-1 or "bare-metal" hypervisor that runs directly on the platform resources of the computing system 994 without an intervening operating system layer.

In some embodiments, the applications 996 can operate within one or more containers. A container is a running instance of a container image, which is a package of binary images for one or more of the applications 996 and any libraries, configuration settings, and any other information that one or more applications 996 need for execution. A container image can conform to any container image format, such as Docker^{®}, Appc, or LXC container image formats. In container-based embodiments, a container runtime engine, such as Docker Engine, LXU, or an open container initiative (OCI)-compatible container runtime (e.g., Railcar, CRI-O) operates on the operating system (or virtual machine monitor) to provide an interface between the containers and the operating system 994. An orchestrator can be responsible for management of the computing system 900 and various container-related tasks such as deploying container images to the computing system 994, monitoring the performance of deployed containers, and monitoring the utilization of the resources of the computing system 994.

The computing system 900 can support various additional input devices, represented generally as user interfaces 998, such as a touchscreen, microphone, monoscopic camera, stereoscopic camera, trackball, touchpad, trackpad, proximity sensor, light sensor, electrocardiogram (ECG) sensor, PPG (photoplethysmogram) sensor, galvanic skin response sensor, and one or more output devices, such as one or more speakers or displays. Other possible input and output devices include piezoelectric and other haptic I/O devices. Any of the input or output devices can be internal to, external to, or removably attachable with the system 900. External input and output devices can communicate with the system 900 via wired or wireless connections.

In addition, one or more of the user interfaces 998 may be natural user interfaces (NUIs). For example, the operating system 994 or applications 996 can comprise speech recognition logic as part of a voice user interface that allows a user to operate the system 900 via voice commands. Further, the computing system 900 can comprise input devices and logic that allows a user to interact with computing the system 900 via body, hand, or face gestures. For example, a user's hand gestures can be detected and interpreted to provide input to a gaming application.

The I/O devices 964 can include at least one input/output port comprising physical connectors (e.g., USB, IEEE 1394 (FireWire), Ethernet, RS-232), a power supply (e.g., battery), a global satellite navigation system (GNSS) receiver (e.g., GPS receiver); a gyroscope; an accelerometer; and/or a compass. A GNSS receiver can be coupled to a GNSS antenna. The computing system 900 can further comprise one or more additional antennas coupled to one or more additional receivers, transmitters, and/or transceivers to enable additional functions.

In addition to those already discussed, integrated circuit components, integrated circuit constituent components, and other components in the computing system 994 can communicate with interconnect technologies such as Intel^{®} QuickPath Interconnect (QPI), Intel^{®} Ultra Path Interconnect (UPI), Computer Express Link (CXL), cache coherent interconnect for accelerators (CCIX^{®}), serializer/deserializer (SERDES), Nvidia^{®} NVLink, ARM Infinity Link, Gen-Z, or Open Coherent Accelerator Processor Interface (OpenCAPI). Other interconnect technologies may be used and a computing system 994 may utilize more or more interconnect technologies.

It is to be understood that FIG. 9 illustrates only one example computing system architecture. Computing systems based on alternative architectures can be used to implement technologies described herein. For example, instead of the processors 902 and 904 and the graphics engine 952 being located on discrete integrated circuits, a computing system can comprise an SoC (system-on-a-chip) integrated circuit incorporating multiple processors, a graphics engine, and additional components. Further, a computing system can connect its constituent component via bus or point-to-point configurations different from that shown in FIG. 9. Moreover, the illustrated components in FIG. 9 are not required or all-inclusive, as shown components can be removed and other components added in alternative embodiments.

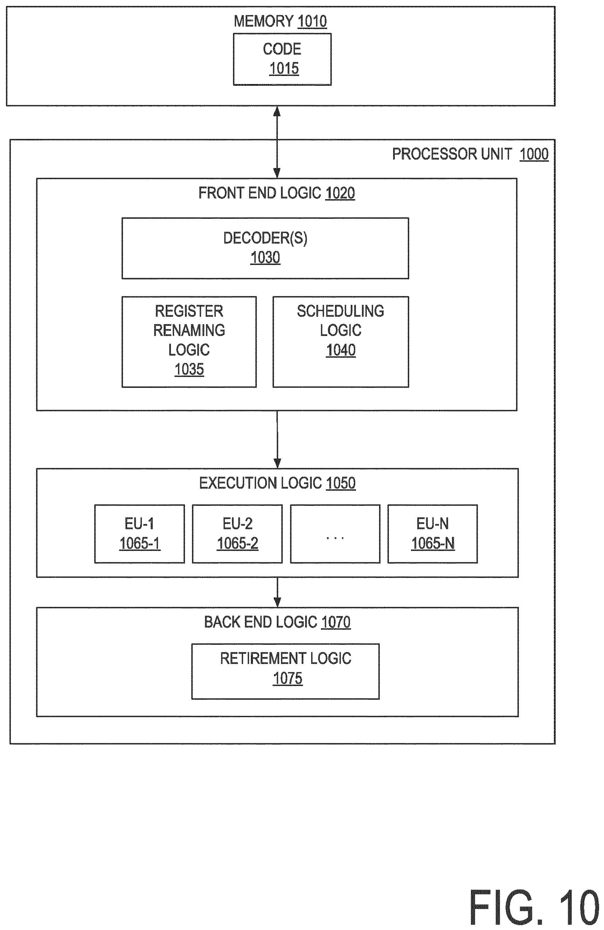

FIG. 10 is a block diagram of an example processor unit 1000 to execute computer-executable instructions as part of implementing technologies described herein. The processor unit 1000 can be a single-threaded core or a multithreaded core in that it may include more than one hardware thread context (or "logical processor") per processor unit.

FIG. 10 also illustrates a memory 1010 coupled to the processor unit 1000. The memory 1010 can be any memory described herein or any other memory known to those of skill in the art. The memory 1010 can store computer-executable instructions 1015 (code) executable by the processor unit 1000.

The processor unit comprises front-end logic 1020 that receives instructions from the memory 1010. An instruction can be processed by one or more decoders 1030. The decoder 1030 can generate as its output a micro-operation such as a fixed width micro-operation in a predefined format, or generate other instructions, microinstructions, or control signals, which reflect the original code instruction. The front-end logic 1020 further comprises register renaming logic 1035 and scheduling logic 1040, which generally allocate resources and queues operations corresponding to converting an instruction for execution.

The processor unit 1000 further comprises execution logic 1050, which comprises one or more execution units (EUs) 1065-1 through 1065-N. Some processor unit embodiments can include a few execution units dedicated to specific functions or sets of functions. Other embodiments can include only one execution unit or one execution unit that can perform a particular function. The execution logic 1050 performs the operations specified by code instructions. After completion of execution of the operations specified by the code instructions, back-end logic 1070 retires instructions using retirement logic 1075. In some embodiments, the processor unit 1000 allows out of order execution but requires in-order retirement of instructions. Retirement logic 1075 can take a variety of forms as known to those of skill in the art (e.g., reorder buffers or the like).

The processor unit 1000 is transformed during execution of instructions, at least in terms of the output generated by the decoder 1030, hardware registers and tables utilized by the register renaming logic 1035, and any registers (not shown) modified by the execution logic 1050.

While at least one embodiment has been presented in the foregoing detailed description, it should be appreciated that a vast number of variations exist. It should also be appreciated that the disclosed embodiments are only examples, and are not intended to limit the scope, applicability, or configuration of the disclosure in any way. Rather, the foregoing detailed description will provide those skilled in the art with a convenient road map for implementing the disclosed aspects of the present disclosure. Various changes can be made in the function and arrangement of elements without departing from the scope of the disclosure as set forth in the appended claims and the legal equivalents thereof.

Any of the disclosed methods (or a portion thereof) can be implemented as computer-executable instructions or a computer program product. Such instructions can cause a computing system or one or more processor units capable of executing computer-executable instructions to perform any of the disclosed methods. As used herein, the term "computer" refers to any computing system, device, or machine described or mentioned herein as well as any other computing system, device, or machine capable of executing instructions. Thus, the term "computer-executable instruction" refers to instructions that can be executed by any computing system, device, or machine described or mentioned herein as well as any other computing system, device, or machine capable of executing instructions.

The computer-executable instructions or computer program products as well as any data created and/or used during implementation of the disclosed technologies can be stored on one or more tangible or non-transitory computer-readable storage media, such as volatile memory (e.g., DRAM, SRAM), non-volatile memory (e.g., flash memory, chalcogenide-based phase-change non-volatile memory) optical media discs (e.g., DVDs, CDs), and magnetic storage (e.g., magnetic tape storage, hard disk drives). Computer-readable storage media can be contained in computer-readable storage devices such as solid-state drives, USB flash drives, and memory modules. Alternatively, any of the methods disclosed herein (or a portion) thereof may be performed by hardware components comprising non-programmable circuitry. In some embodiments, any of the methods herein can be performed by a combination of non-programmable hardware components and one or more processing units executing computer-executable instructions stored on computer-readable storage media.

The computer-executable instructions can be part of, for example, an operating system of the computing system, an application stored locally to the computing system, or a remote application accessible to the computing system (e.g., via a web browser). Any of the methods described herein can be performed by computer-executable instructions performed by a single computing system or by one or more networked computing systems operating in a network environment. Computer-executable instructions and updates to the computer-executable instructions can be downloaded to a computing system from a remote server.

Further, it is to be understood that implementation of the disclosed technologies is not limited to any specific computer language or program. For instance, the disclosed technologies can be implemented by software written in C++, C#, Java, Perl, Python, JavaScript, Adobe Flash, C#, assembly language, or any other programming language. Likewise, the disclosed technologies are not limited to any computer system or type of hardware.

Furthermore, any of the software-based embodiments (comprising, for example, computer-executable instructions for causing a computer to perform any of the disclosed methods) can be uploaded, downloaded, or remotely accessed through a suitable communication means. Such suitable communication means include, for example, the Internet, the World Wide Web, an intranet, cable (including fiber optic cable), magnetic communications, electromagnetic communications (including RF, microwave, ultrasonic, and infrared communications), electronic communications, or other such communication means.

Additionally, theories of operation, scientific principles, or other theoretical descriptions presented herein in reference to the apparatuses or methods of this disclosure have been provided for the purposes of better understanding and are not intended to be limiting in scope. The apparatuses and methods in the appended claims are not limited to those apparatuses and methods that function in the manner described by such theories of operation.

As used herein, phrases such as "embodiments," "an aspect of the present disclosure," "various aspects of the present disclosure," "some aspects of the present disclosure," and the like, indicate that some aspects of the present disclosure may have some, all, or none of the features described for other aspects of the present disclosure. "First," "second," "third," and the like describe a common object and indicate different instances of like objects being referred to; unless specifically stated, they do not imply a given sequence, either temporally or spatially, in ranking, or any other manner. In accordance with patent application parlance, "connected" indicates elements that are in direct physical or electrical contact with each other and "coupled" indicates elements that co-operate or interact with each other, coupled elements may or may not be in direct physical or electrical contact. Furthermore, the terms "comprising," "including," "having," and the like, are utilized synonymously to denote non-exclusive inclusions.

As used in this application and the claims, a list of items joined by the term "at least one of" can mean any combination of the listed terms. For example, the phrase "at least one of A, B and C" can mean A; B; C; A and B; A and C; B and C; or A, B, and C. Similarly, as used in this application and the claims, a list of items joined by the term "one or more of' can mean any combination of the listed terms. For example, the phrase "one or more of A, B and C" can mean A; B; C; A and B; A and C; B and C; or A, B, and C.

The following Examples pertain to additional aspects of the present disclosure of technologies disclosed herein.

Example 1 is an impeller, including: a hub component having a circumference; a plurality of blades, individual ones of the blades have a first end and are attached to the hub component in a sequential order, such that sequential first ends are attached to the circumference; and wherein the individual ones of the blades further have a blade type that varies as a function of an indexing function applied to the sequential order.

Example 2 includes the subject matter of Example 1, wherein the blade type includes a first length or a second length.

Example 3 includes the subject matter of Example 2, wherein the first length is smaller than the second length.

Example 4 includes the subject matter of Example 2, wherein the first length is larger than the second length.

Example 5 includes the subject matter of Example 1, wherein the blade type includes a notched edge or a smooth edge.

Example 6 includes the subject matter of Example 5 wherein the notched edge further includes one or more notch-location blade types.

Example 7 includes the subject matter of Example 5 wherein the notched edge further includes one or more notch-size or notch-shape blade types.

Example 8 includes the subject matter of Example 1, wherein the blade type includes a perforated surface or a solid surface.

Example 9 includes the subject matter of Example 8 wherein the perforated surface further includes one or more perforation-location blade types.

Example 10 includes the subject matter of Example 1, wherein the indexing function is even numbers or prime numbers.

Example 11 includes the subject matter of Example 1, wherein the indexing function includes one or more of even numbers, prime numbers, an arithmetic sequence, a geometric sequence, square numbers, and triangular numbers.

Example 12 includes the subject matter of any one of Examples 1-11, wherein spaces between sequential first ends are substantially equal.

Example 13 includes the subject matter of any one of Examples 1-11, wherein spaces between sequential first ends vary by more than 20%.

Example 14 includes an apparatus, including: a fan housing; and a cooling fan disposed within the fan housing, the cooling fan including: a hub component having a circumference; a plurality of blades, individual ones of the blades have a first end and are attached to the hub component in a sequential order, such that sequential first ends are attached to the circumference; and wherein the individual ones of the blades further have a blade type that varies as a function of an indexing function applied to the sequential order, and the indexing function is one of prime numbers or odd numbers.

Example 15 includes the subject matter of Example 14, wherein the blade type includes a first length or a second length.

Example 16 includes the subject matter of Example 14, wherein the blade type includes a notched edge or a smooth edge.

Example 17 includes the subject matter of Example 14, wherein the blade type includes a perforated surface or a solid surface.

Example 18 includes the subject matter of Example 14, wherein spaces between sequential first ends vary by more than 20%.

Example 19 is a compute device, including: a housing including air intake holes and an air exhaust vent; the subject matter of Example 14 disposed within the housing with access to the air intake holes and air exhaust vent; a motherboard disposed within the housing; and a heat generating component attached to the motherboard.

Example 20 includes the subject matter of Example 19, wherein the housing further comprises a keyboard.

Example 21 includes the subject matter of Example 19, wherein the housing further comprises a display.

## Claims

1. An impeller, comprising:
a hub component having a circumference;
a plurality of blades, each blade having a first end and attached to the circumference of the hub component in a sequential order and a second end that extends radially outward therefrom;
wherein the plurality of blades comprises a first blade, a second blade, and a third blade, in sequential order;
wherein the first blade comprises a first blade type, the second blade comprises the first blade type, and the third blade comprises a second blade type; and
wherein the first blade type comprises a perforated blade, defined as having at least one through-hole, and the second blade type comprises a solid blade type.

2. The impeller of claim 1, wherein the first blade type further includes a first length and the second blade type further includes a second length.

3. The impeller of claim 2, wherein the first length is smaller than the second length.

4. The impeller of claim 2, wherein the first length is larger than the second length.

5. The impeller of any one of claims 1-4, wherein the first blade type and the second blade type are two of a plurality of blade types; and wherein individual blades have a blade type as a function of a respective position in the sequential order.

6. The impeller of any one of claims 1-5, wherein the perforated blade further includes through-holes of one or more shapes.

7. The impeller of any one of claims 1-6, wherein the first blade type or the second blade type further includes a notched edge.

8. The impeller of claim 7, wherein the notched edge comprises one or more notches distributed radially.

9. The impeller of claim 7, wherein the notched edge comprises one or more notches distributed axially.

10. The impeller of any one of the claims 5-9, wherein the function includes one or more of prime numbers, an arithmetic sequence, a geometric sequence, square numbers, and triangular numbers.

11. The impeller of any one of claims 1-10, wherein a first space between the first end of the first blade and the first end of the second blade and a second space between the first end of the second blade and the first end of the third blade is substantially equal.

12. The impeller of any one of claims 1-10, wherein a first space between the first end of the first blade and the first end of the second blade and a second space between the first end of the second blade and the first end of the third blade varies by more than about 20%.

13. The impeller of any one of claims 1-12, further comprising a housing at least partially enclosing the impeller.

14. The impeller of claim 13, further comprising air intake holes and an exhaust vent formed in the housing.

15. The impeller of claim 14, further comprising:
a motherboard disposed within the housing; and
a heat generating component attached to the motherboard.
